**Europäisches Patentamt**

**European Patent Office**

**Office européen des brevets**

(19)

(11) Veröffentlichungsnummer: **0 168 592**
**B1**

(12)

# EUROPÄISCHE PATENTSCHRIFT

(45) Veröffentlichungstag der Patentschrift:
03.08.88

(51) Int. Cl.⁴: **H 04 N 1/00**

(21) Anmeldenummer: **85106160.6**

(22) Anmeldetag: **20.05.85**

(54) **Gerät zum Abtasten und/oder Bedrucken von Aufzeichnungsträgern.**

(30) Priorität: **29.05.84  DE 3420097**

(43) Veröffentlichungstag der Anmeldung:
**22.01.86 Patentblatt 86/4**

(45) Bekanntmachung des Hinweises auf die Patenterteilung:
**03.08.88 Patentblatt 88/31**

(84) Benannte Vertragsstaaten:
**DE FR GB IT NL SE**

(56) Entgegenhaltungen:
**DE - C - 813 016**
**US - A - 3 288 461**
**US - A - 3 502 814**
**US - A - 4 005 257**

**SIEMENS TELECOM REPORT, Band 2, Nr. 4, August 1979, Seiten 223-228, München, DE; B. RUCKMANN: "Der Fernkopierer HF 2050-en neuartiges Gerät der Gruppe 2"**

(73) Patentinhaber: **Siemens Aktiengesellschaft Berlin und München, Wittelsbacherplatz 2, D-8000 München 2 (DE)**

(72) Erfinder: **Vollert, Emmeran, Ing.-grad., Wimmerweg 1, D-8151 Grosshöhenrain (DE)**

## Beschreibung

Die Erfindung betrifft ein Gerät zum Abtasten und/oder zum Bedrucken von Aufzeichnungsträgern gemäss dem Oberbegriff des Patentanspruches 1.

In derartigen Druckgeräten wird gewöhnlich der Aufzeichnungsträger, in der Regel in Form von Aufzeichnungspapier, über eine Walze vor dem waagrecht angeordneten eigentlichen Druckkopf geführt. Derartige Druckgeräte erfordern relativ voluminöse Einrichtungen zur Zuführung und Einführung des Aufzeichnungsträgers, die den Gesamtaufbau des Gerätes erheblich vergrössern. Ausserdem sind solche Druckgeräte nicht zum Bedrucken von steifen und sehr dicken Aufzeichnungsträgern geeignet.

Für ein Kopiergerät ist es bekannt (DE-A-30 00 466), den Aufzeichnungsträger einer ebenen Haltevorrichtung zuzuführen und die Druckeinrichtung darüber anzuordnen. Nach dem Einführen des Aufzeichnungsträgers wird dieser auf der ebenen Haltevorrichtung festgehalten und die gesamte Haltevorrichtung wird in Längsrichtung des Aufzeichnungsträgers hin und her bewegt, während zugleich der Druckkopf eine dazu senkrechte Bewegung ausführt. Eine solche Anordnung ist aus mehreren Gründen problematisch. So muss der Aufzeichnungsträger für die Dauer eines Druckvorganges absolut fest auf der Haltevorrichtung gehalten werden, da bereits ein geringes Verrutschen zu Aufzeichnungsfehlern führt. Eine unterhalb der Haltevorrichtung zu diesem Zweck vorgesehene Vakuumkammer erhöht den Aufwand eines derartigen Kopiergerätes erheblich. Hohe Anforderungen werden auch an die beiden Antriebe der Haltevorrichtung gestellt.

Die Kombination eines optischen Abtastsystem mit einer Druckeinrichtung würde dem Wunsch für ein modernes Bürogerät insoweit entgegenkommen, als damit ein Lese-, ein Druck- und ein Kopiergerät zur Verfügung stünde. Eine Zusammenfassung von dazu geeigneten Einzelgeräten ist zwar möglich (EP-A-00 25 707 ), doch führt das zu einem umfangreichen und aufwendigen Aufbau, der den heute angelegten Ergonomiemassstäben nicht entspricht. Darüber hinaus wäre damit auch ein sehr grosser konstruktiver und fertigungstechnischer Aufwand verbunden.

Auch auf dem Gebiet der sog. Faksimiletechnik ist ein Gerät bekannt (US-A-3 502 814), bei dem die Funktionen Abtasten und Drucken zusammengefasst sind. Für den Einsatz als Druck- und Kopiergerät in Form eines kleinen, kompakten Bürogerätes ist diese Vorrichtung nicht geeignet. So befindet sich der Vorratsraum für den Aufzeichnungsträger unterhalb der Abtast- und Druckeinrichtung, wodurch einerseits die Kapazität des Papiervorrates beschränkt ist, was andererseits aber auch eine sehr enge bogenförmige Papierführung erfordert. Für ein Bürogerät der obengenannten Art ist jedoch ein ausreichend grosser Papiervorrat ebenso unerlässlich wie die Möglichkeit, nach Art und Format unterschiedliche Aufzeichnungsträger zu bearbeiten. In der bekannten Vorrichtung können z.B. steife oder starre Aufzeichnungsträger nicht verwendet werden. Weiterhin werden bei der bekannten Vorrichtung vier auf einem Band gegenseitig versetzt angeordnete Abtast- und Druckeinrichtungen vorgesehen. Damit ist aber eine Abtastung und ein Druck in einer für Druck- und Kopiergeräte neuerdings geforderten Qualität nicht oder nur bei ständiger Justierung, somit also nur mit ganz erheblichem Aufwand erreichbar.

Aufgabe der Erfindung ist es, ein Gerät anzugeben, mit dem sowohl eine optische Abtastung grafischer Vorlagen eines Aufzeichnungsträgers als auch die Darstellung von Zeichen und Mustern auf einem Aufzeichnungsträger bei kleinem, kompaktem und insbesondere flachem Aufbau in einem einzigen Gerät möglich ist, wobei eine Beschränkung durch die Art und das Format eines Aufzeichnungsträgers weitgehend entfällt, bei dem zugleich auch die Bedienung, also die ergonomischen Bedingungen deutlich verbessert sind, und das den Einsatz von verschiedenen Druckeinrichtungen, insbesondere eine nach dem Unterdruckverfahren arbeitende Tintenschreibeinrichtung ermöglicht.

Gelöst wird diese Aufgabe durch die Merkmale des Patentanspruches 1. Weitere Ausgestaltungen sind in den Unteransprüchen gekennzeichnet.

Einer der wesentlichen Vorteile, die mit dem erfindungsgemässen Gerät verbunden sind, besteht darin, dass zugleich mit dem Transport des Aufzeichnungsträgers ein Abtastvorgang oder ein Druckvorgang durchgeführt werden kann.

Das gesamte Gerät kann in einem besonders flachen Gehäuse untergebracht werden, wodurch sich neben einem kompakten und kleinen Aufbau auch für die ergonomischen Anforderungen besonders günstige Gestaltungsmöglichkeiten bieten, Ein weiterer Vorteil der Anordnug in einem flachen Gehäuse besteht darin, dass der Aufzeichnungsträger gerade durchläuft, d.h. dass auch sehr steife und feste Aufzeichnungsträger wie z.B. Karton problemlos eingeführt, abgetastet und/oder bedruckt werden können. Schliesslich bietet die Erfindung auch bei dem Bedrucken von Formularen Vorteile, da mit einer Abtastung und Übertragung der Formularlinien ein anschliessendes zeilengenaues Bedrucken des Formulares gewährleistet ist.

Die Druckeinrichtung kann z.B. ein Nadeldruckkopf oder ein Thermodrucker sein. Dadurch, dass die Druckeinrichtung unterhalb des Aufzeichnungsträgers angeordnet ist, kann mit besonderem Vorteil eine Tintenschreibeinrichtung Verwendung finden, die nach dem für Tintendrucker vorteilhaften Unterdruckverfahren arbeitet.

Einzelheiten der Erfindung werden im folgenden anhand der Zeichnungen näher erläutert. Dort zeigen:

Fig. 1 und 2 den Grundaufbau eines Druckgerätes nach der Erfindung,

Fig. 3 und 4 ein Ausführungsbeispiel für das Druckgerät, Fig. 5 und 6 ein Ausführungsbeispiel zur mehrfarbigen Abtastung und zum mehrfarbigen Bedrucken,

Fig. 7 eine Ausgestaltung der Vereinzelungs- und Transportvorrichtung,

Fig. 8 bis 10 zeigen einige besonders vorteilhafte Anwendungsbeispiele.

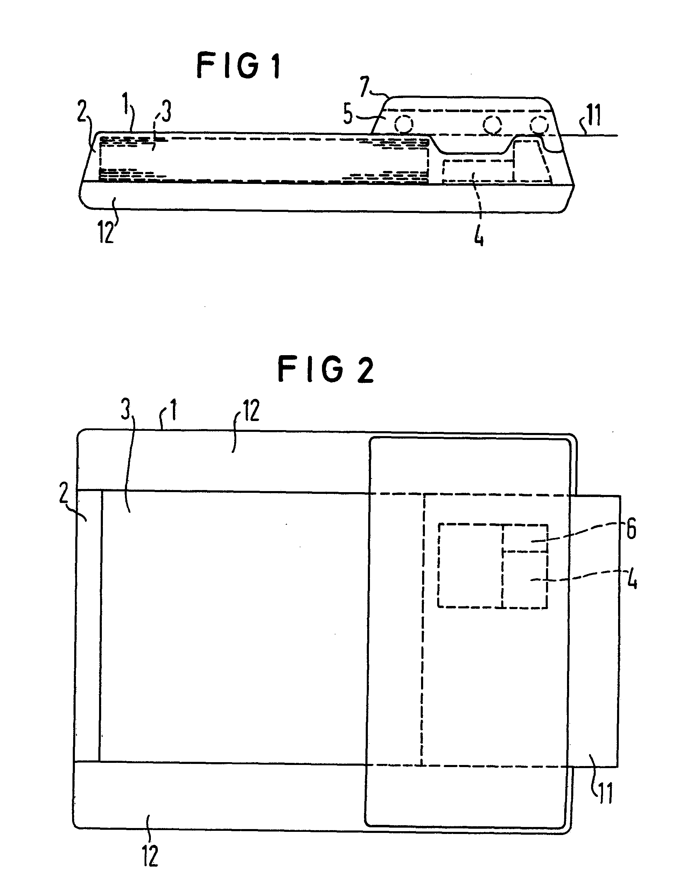

Zur Erläuterung der wesentlichen Merkmale der Erfindung wird zunächst auf die Figuren 1 und 2 Bezug genommen. Fig 1 zeigt das Gerät in Seitenansicht, Fig. 2 ist einen Darstellung in Aufsicht. Das Druckgerät besteht aus zwei Gehäuseteilen, einem Bodenteil 1 und einem Oberteil 7, wobei das Oberteil 7 lösbar mit dem unteren Bodenteil 1 verbunden ist und z.B. aufgeklappt werden kann. Im linken Teil des Bodenteils 1 befindet sich ein Vorratsraum 2 zur Aufnahme des Aufzeichnungsträgers. Im Beispiel handelt es sich um einen Einzelblattstapel 3. Unterhalb und seitlich des Vorratsraumes 2 steht ein grosser Raum 12 zur Aufnahme der elektronischen Schaltungen des Druckgerätes zur Verfügung. Der rechte Teil des Bodenteils 1 enthält eine Druckeinrichtung 4. Weiterhin ist dort eine optische Abtasteinrichtung 6 in Form eines optischen Bildabtasters oder einer Fotodiodenzeile angeordnet. Darüber befindet sich im Oberteil 7 eine Vereinzelungs- und Transportvorrichtung 5 für den Aufzeichnungsträger 11.

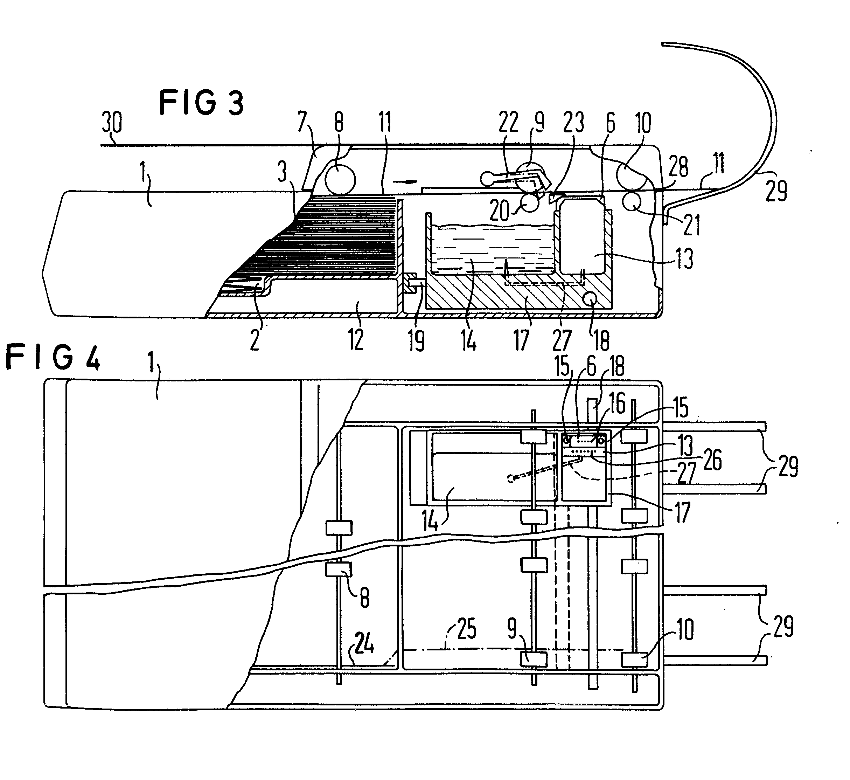

Der anhand von Fig. 1 und 2 beschriebene Aufbau wird im folgenden unter Bezugnahme auf ein in Fig. 3 und 4 dargestelltes detailliertes Ausführungsbeispiel näher beschrieben. Dabei zeigt die Fig. 3 das Ausführungsbeispiel in Seitenansicht und Fig. 4 in Aufsicht.

Im linken Teil des Bodenteils 1 befindet sich im Vorratsraum 2 der Einzelblattstapel 3. Im rechten Teil des Bodenteils ist die Druckeinrichtung 4 und die optische Abtasteinrichtung 6 angeordnet. Die Druckeinrichtung ist in diesem Beispiel eine nach dem Unterdruckverfahren arbeitende Tintenschreibeinrichtung, von der hier der Tintendruckknopf 13 und der Tintenvorratsbehälter 14 dargestellt sind. Der Tintenvorratsbehälter 14 ist als austauschbares Teil z.B. als auswechselbare Tintenflasche ausgebildet. Die optische Abtasteinrichtung 6 kann im einfachsten Fall ein sogenannter punktförmiger Reflexionsabtaster sein. Im Ausführungsbeispiel findet als optische Abtasteinrichtung 6 ein an sich bekannter Zeilenabtaster Verwendung. Dieser besteht im wesentlichen aus Leuchtelementen 15 und einer Reihe von Fotodioden 16. Sowohl die optische Abtasteinrichtung 6 als auch die Tintenschreibeinrichtung 13, 14 sind gemeinsam auf einem sogenannten Druckerwagen 17 angeordnet, der z.B. auf eine Führungsschiene 19 aufsteckbar und längs einer Führung 18 quer zur Vorschubrichtung des Aufzeichnungsträgers 11 hin- und herbewegbar ist.

Die im Oberteil 7 befindliche Vereinzelungs- und Transportvorrichtung besteht im wesentlichen aus den Friktionsrollen (oder Antriebsrollen) 8, 9 und 10 mit den Gegenrollen 20 und 21 die über einen hier nicht dargestellten Motor und ein ebenfalls nicht dargestelltes Riemengetriebe angetrieben werden. Über die Friktionsrollen 8 werden jeweils Einzelblätter, für die im folgenden ebenfalls das Bezugzeichen 11 verwendet wird, des Stapels 3 erfasst und in Pfeilrichtung nach rechts transportiert. Die Friktionsrollen 9 und 20 übernehmen nach Einführen des vereinzelten Aufzeichnungsträgers das Einzelblatt 11 und transportieren es durch das Druckgerät. Um beim Auswerfen eines bedruckten Einzelblattes 11 das evtl. noch nicht vollständig getrocknete Schriftbild nicht zu verwischen ist es vorteilhaft, die Gegenrollen 21 jeweils derart seitlich anzuordnen, dass sie das Einzelblatt 11 jeweils nur am nicht bedruckten Rand erfassen. Den mittleren Friktionsrollen 9 sind bewegliche Hebel 22 zugeordnet, die wie später erläutert wird, zur Ausrichtung des Aufzeichnungsträgers dienen. In unmittelbarer Nähe der Druckeinrichtung, zum Beispiel in der Nähe des Druckkopfes 13, jedoch vor dem eigentlichen Druck- oder Schreibbereich, ist ein an sich bekanntes optisch abtastbares sogenanntes Zeilenlineal 23 angeordnet. Es bestimmt mit seiner oberen Kante den Abstand zwischen Aufzeichnungsträger und Druckkopf.

Für den elektronischen Teil des Druckgerätes steht im Bodenteil 1 ein grpsser Raum 12 zur Verfügung; Bauelemente, Baugruppen und Schaltungen können somit räumlich relativ grosszügig verteilt werden, so dass aufwendige Kühlmassnahmen entfallen. Damit ist auch der Vorteil verbunden, dass sich unterhalb der Tintenschreibeinrichtung keine elektronischen Schaltungen oder elektrischen Bauteile befinden. Dies hat neben einer geringeren Bauhöhe des Gerätes den Vorteil, dass bei einem evtl. auftretenden Auslaufen von Tinte keine Störung der Elektronik zu befürchten ist.

Die Funktionsweise des Druckgerätes ist im einzelnen folgende.

Der von links in den Vorràtsraum 2 eingeschobene Einzelblattstapel 3 befindet sich nach dem Einlegen soweit im Inneren des Druckgerätes, dass jeweils das oberste Blatt des Stapels 3 als Einzelblatt 11 von der Friktionsrolle 8 die als Einzugsrolle bezeichnet werden kann, erfasst ist. Die Friktionsrolle 8 hat also zwei Funktionen. Zum einen erfasst sie jeweils das oberste Blatt, wirkt also als Papiervereinzelner. Zum zweiten führt sie jedes Einzelblatt 11 in das Innere des Druckgerätes nach rechts bis zu den Ausrichtehebeln 22. Die Einzugsrollen 8 werden über ein Freilaufgetriebe nur während des Rückwärtslaufes des Zeilenmotors angetrieben. Die Friktionsrollen 9 sind während dieser Bewegung leicht angehoben. Die Ausrichthebel 22 sind nach unten gesenkt; sie heben sich beim anschliessenden Vorwärtslauf an und die Friktionsrollen 9 senken sich auf das Einzelblatt 11. Den Transport des Einzelblattes 11 übernehmen nunmehr die Friktionsrollen 9 zusammen mit den Gegenrollen 20, während die Friktionsrollen 8 lediglich im Freilauf mitlaufen. Das Einzelbaltt 11 wird, bevor es in den Bereich der Druckeinrichtung gelangt über das Zeilenlineal 23 geführt, das wie an sich bekannt, Teil eines optischen Abtastsystems ist. Durch optische Abtastung der z.B. in Form von Strichmarkierungen auf dem Zeilenlineal 23 angeordneten reflektierenden und nicht reflektierenden Bereiche, werden bekanntlich Steuerkriterien für die Bewegung des Druckerwagens 17, sowie für den Start und für die Beendigung eines Druckvorganges einer Zeile gebildet.

Die Kanten des Einzelblattes 11 werden durch weitere Elemente der optischen Abtasteinrichtung 6 erkannt. Ein daraus abgeleitetes Signal kann zur vorbereitenden Einleitung des Druckvorganges ausgewertet werden. Beispielsweise kann unter Berücksitigung des Abstandes zwischen der optischen Abtasteinrichtung 6 und dem Druckkopf 13 der Druckeinrichtung sowie unter Berücksichtigung der Transportgeschwindigkeit der Druckbeginn für die erste Zeile des Einzelblattes 11 ausgelegt werden. Auf diese Weise ist eine Einstellung des oberen freien Randes jedes Einzelblattes 11 möglich.

Die Führung des Einzelblattes 11 zwischen den Friktionsrollen 9, 20 und 10, 21 einerseits und dem Zeilenlineal 23 andererseits stellt zugleich sicher, dass der Abstand zwischen der Oberfläche des Druckkopfes 13 der Druckeinrichtung und dem Einzelblatt 11 um Bereich der Druckstelle einen konstanten Wert aufweist. Das ist bei Tintendruckverfahren für eine gleichbleibend gute Druckqualität von grosser Bedeutung. Der Abstand zwischen dem Zeilenlineal 23 und den Friktionsrollen 9 und 10 stellt sich von selbst ein, da die Rollenachsen einen Freiheitsgrad nach oben aufweisen. Der die Friktion erhöhende Druck auf den Aufzeichnungsträger wird entweder durch Eigengewicht oder durch Federkraft bestimmt. Somit können Aufzeichnungsträger verschiedener Dicke problemlos verwendet werden.

Um eine Anpassung an Aufzeichnungsträger verschiedener Formate zu ermöglichen, können gemäss einer Ausgestaltung der Erfindung die seitlichen Wandungen 24 des Vorratsraumes 2 verschiebbar sein, wie das in Fig. 4 durch die strichpunktierte Linie 25 angedeutet ist. Es ist in diesem Falle vorteilhaft zusammen mit dem Verschieben der Seitenwandungen auch die unteren Gegenrollen 21 zu verschieben.

Die Darstellung von Zeichen oder Mustern auf dem Aufzeichnungsträger, das heisst das Bedrukken des in der beschriebenen Weise eingeführten Einzelblattes 11 erfolgt von unten. Es wird also die Unterseite des Einzelblattes 11 beschrieben. Die Anordnung des Druckkopfes 13 der Druckeinrichtung unterhalb des Druckbereiches ermöglicht den Einsatz einer Tintenschreibeinrichtung, die nach dem Unterdruckverfahren arbeitet. Das ist deshalb besonders vorteilhaft, weil keine zusätzlichen Massnahmen getroffen und vorgesehen werden müssen, mit denen ein unkontrolliertes Ausfliessen von Tinte vermieden wird. Als Druckkopf 13 kann beispielsweise ein Druckkopf verwendet werden, wie er in der Siemens-Zeitschrift 1977, Heft 4, Seite 219–221 beschrieben ist. Mit den gleichen Vorteilen kann aber auch ein in der Patentanmeldung EP-A- 0 150 348 (veröffentlicht am 07-08-1985) beschriebener Druckkopf Verwendung finden. Im wesentlichen arbeitet der Druckkopf 13 folgendermassen. Eine Reihe von in einem flüssigkeitsdichten Kopfgehäuse verlaufenden Tintenkanälen, die an der vorderen, im Beispiel am oberen Ende des Druckkopfes in einer oder in mehreren parallelen Austrittsöffnungen 26 enden, stehen über eine Tintenzuführleitung 27 mit dem Tintenvorratsbehälter 14 in Verbindung. Jedem Tintenkanal ist ein piezoelektrisches Antriebselement zugeordnet, unter dessen Einwirkung bei entsprechender Ansteuerung über die hier nicht dargestellte Druckerelektronik im Inneren des ihm zugeordneten Tintenkanals eine Art Stoss- oder Schockwelle erzeugt wird. Diese führt dazu, dass kurzzeitig der normalerweise herrschende geringe Unterdruck aufgehoben wird. Dadurch wird eine kleine Tintenmenge in Form eines Tröpfchens aus der Austrittsöffnung ausgestossen und gegen das Einzelblatt 11 gespritzt. Der geringe Unterdruck, unter dem die Tinte in den Tintenkanälen des Druckkopfes 13 steht und der jeweils nur für die Dauer eines Tröpfchenausstosses aufgehoben ist, wird dadurch erreicht, dass der Tintenvorratsbehälter unterhalb des Niveaus der Austrittsöffnungen angeordnet ist. Durch die Relativbewegung zwischen dem Aufzeichnungsträger, im Beispiel zwischen dem Einzelblatt 11 und dem Druckkopf 13 einerseits und dem zum Beispiel über einen Zeichengenerator gesteuerten impulsweisen Ausstoss von Einzeltröpfchen andererseits können auf dem Einzelblatt 11 punktweise aufgebaute Zeichen oder Muster beliebiger Form rasterförmig in einer vorgegebenen Matrix dargestellt werden. Die Darstellung, das heisst der eigentliche Druck geschieht zeilenweise, da sich der die Druckeinrichtung mit dem Druckkopf 13 tragende Druckerwagen 17 längs den Schreibzeilen hin und her bewegt. Mit fortschreitendem Papiervorschub wird das über den Druckkopf 13 hinweg bewegte Einzelblatt 11 durch den Austrittschlitz 28 des Druckgerätes nach aussen geschoben und einer Ablage zugeführt. Diese kann vorteilhafter Weise als ein bogenförmig gestalter Korb 29 ausgebildet sein, der das Einzelblatt 11 aufnimmt nach oben führt und auf einer Ablagefläche 30 des Oberteiles 7 ablegt, wobei nunmehr die bedruckte Seite nach oben weist, also gelesen werden kann. Der Korb 29 und die Ablagefläche 30 dient auch als Auffangwanne hinter dem Druckgerät, was dann besonders vorteilhaft ist, wenn beispielsweise starre Aufzeichnungsträger verwendet werden.

Die in das Druckgerät integrierte optische Abtasteinrichtung 6 bietet neben der Überwachung der Anfangs- und der Endkanten jedes eingeführen Einzelblattes 11 auch die Möglichkeit eine generelle Papierüberwchung durchzuführen. Da die optische Abtasteinrichtung auch die Transportlöcher oder spezielle Formfeedlöcher abtasten kann und eine Synchronisation somit optisch und nicht mechanisch erfolgt, wird auch ein Betrieb mit Endlospapier ohne Stiftenrad- bzw. ohne Traktorantrieb ermöglicht. Schliesslich ist durch die integrierte Anordnung der Abtasteinrichtung 6 und der Druckeinrichtung auch die Voraussetzung geschaffen, das Druckgerät als Faksimilegerät oder als Kopiergerät einzusetzen. Zweckmässigerweise wird als optischer Abtaster ein sogenannter CCD-Zeilenzensor verwendet, dessen als optische Abtastelemente wirkenden Fotodioden 16 die Zeichen oder die grafischen Muster eines Aufzeichnungsträgers, im Beispiel des Einzelblattes 11 je Zeile spaltenweise abtasten. Die Vereinzelung, der Einzug und der Transport des Aufzeichnungsträgers in Form von Einzelblättern, sowie das Bedrucken erfolgt in der bereits beschriebenen Weise.

Die optische Abtasteinrichtung 6 arbeitet dabei als sogenannter Reflektionsabtaster. Die Leuchtdioden 15 die, wie Fig. 3 und 4 zeigen, in einem Gehäuse angeordnet sind, beleuchten durch ein transparentes Gehäuseteil jedes Einzelblatt 11. Über ein zweckmässigerweise vorgesehenes hier nicht dargestelltes Linsensystem werden die optischen Abtastsignale den Fotodioden 16 zugeführt. Dort erfolgt die Umwandlung in elektrische Signale. Der bei einer optischen Abtastung sehr störende Einfluss von Fremdlicht wird dabei nahezu vollständig vermieden, da die Abtasteinrichtung im Inneren des Druckers angeordnet ist. Ein besonderer Vorteil der integrierten Anordnung des Zeilensensors besteht darin, dass damit mehrere Funktionen erfüllt werden. Er dient nicht nur zur Abtastung einer Vorlage sondern z.B. auch zur Abtastung des Zeilenlineals, der Papierlage, des Papieranfangs u. -endes, sowie der Formfeed- oder Transportlochungen.

Nach dem Durchlauf eines Einzelblattes 11 steht der gespeicherte Informationsinhalt des durch Abtastung sozusagen gelesenen Einzelblattes für einen nachfolgenden Bearbeitungsvorgang zur Verfügung. Nach einer Bearbeitung werden die zwischengespeicherten Daten der hier nicht dargestellten Steuerung der Tintenschreibeinrichtung zugeführt, wodurch in der vorher beschriebenen Weise die Zeichen oder grafischen Muster durch Ausstossen einzelner Tintentröpfchen im Rahmen des vorgegebenen Rasters auf dem Einzelblatt aufgebaut werden. Die für einen solchen Druckvorgang, der somit einem Kopiervorgang entspricht, erforderlicherweise manuelle Tätigkeit einer Bedienungsperson, beschränkt sich auf das Einlegen der abzutastenden und zu kopierenden Vorlage sowie auf die Betätigung einer Taste.

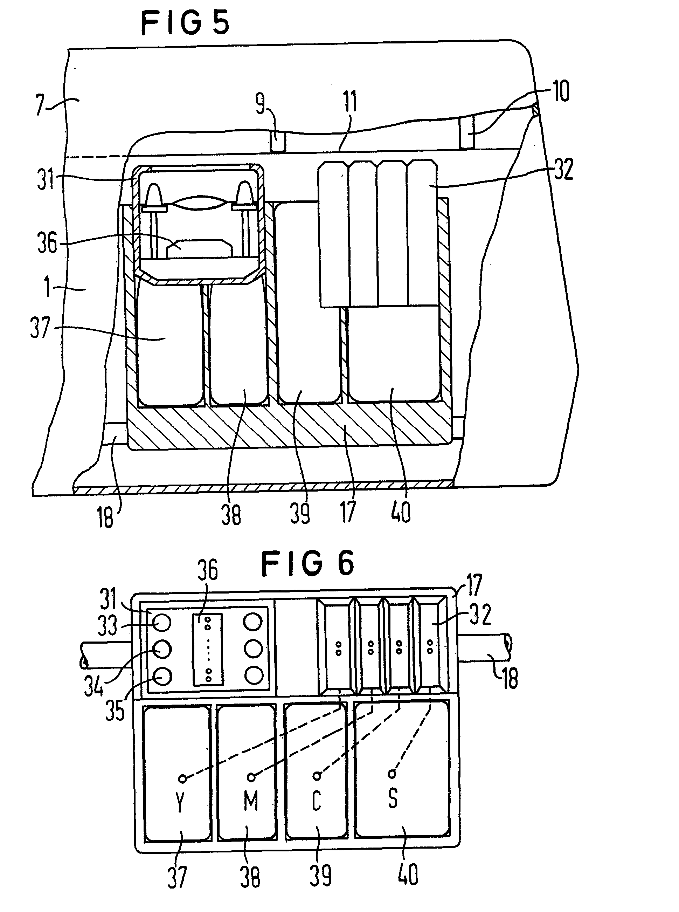

Bei dem in den Fig. 3 und 4 dargestellten Ausführungsbeispiel ist sowohl für die Abtastung als auch für den Druckvorgang von einer einfarbigen Darstellung ausgegangen worden. Gemäss einer Ausgestaltung der Erfindung ist aber auch eine Mehrfarbenabtastung und ein Mehrfarbendruck möglich. Ein Ausführungsbeispiel dafür zeigen die Fig. 5 und 6. Dort sind im wesentlichen lediglich die Teile der Abtastvorrichtung und der Druckeinrichtung dargestellt worden, die zur Erläuterung der mehrfarbigen Abtastung und mehrfarbigen Aufzeichnung notwendig sind.

Am Druckerwagen 17 sind in diesem Beispiel eine zur Abtastung mehrfarbiger Muster dienende Abtasteinrichtung 31 und ein Mehrfarbendruckkopf 32 angeordnet. Die Bewegung des Druckerwagens 17 in Zeilenrichtung, das heisst quer zum Aufzeichnungsträger, der hier wiederum durch das Einzelblatt 11 dargestellt ist, sowie der Transport des Aufzeichnungsträgers mittels der hier nicht dargestellten Einzugsrollen und der antreibenden Friktionsrollen 9 und 10 geschieht wie vorher beschrieben. Die Abtastung und das Bedrucken erfolgen wiederum von unten. Die Abtastvorrichtung 31, die im Beispiel als Reflektionsabtaster arbeitet, besteht ais mehrern paarweise angeordneten verschiedenfarbigen Leuchtdioden 33, 34 und 35, zum Beispiel aus Leuchtdioden für rotes, grünes, und blaues Licht entsprechend den Grundfarben rot, grün und blau. Die Abtastung des Einzelblattes 11 erfolgt zeilenweise, wie an sich bekannt, derart, dass jeder Bildpunkt der abzutastenden Zeichen oder Muster mehrmals, im Beispiel dreimal, und zwar jeweils getaktet durch die einzelnen Leuchtdioden 33, 34 und 35 angestrahlt wird. Die optischen Abtastwerte stehen dann den Fottodioden 36 zur Verfügung. Auf diese Weise werden für jede der Grundfarben Rot (R), Grün (G) und Blau (B) Informationen gebildet, die z.B. an ein Farbgrafik-Bildschirmsystem übergeben werden.

Die Druckeinrichtung ist eine Tintenschreibeinrichtung. Sie besteht im wesentlichen wiederum aus dem eigentlichen Druckkopf, der in diesem Falle als Mehrfarbendruckkopf 32 ausgebildet ist und einer der Anzahl der vorgehenden Grundfarben, im Beispiel der zu den Farben Rot, Gelb und Blau komplementären Grundfarben Cyan (C), Magenta (M) und Gelb (Y) entsprechenden Anzahl von Tintenvorratsbehältern 37, 38 und 39. Es ist vorteilhaft zusätzlich noch einen Tintenvorratsbehälter 40 für im allgemeinen häufig benötigte schwarze Tinte vorzusehen. Die Tintenvorratsbehälter 37 bis 40 sind in einem Tintenmagazin zusammengefasst. Dieses ist lösbar in der Tintenvorratshalterung angeordnet und kann somit einfach ausgewechselt werden. Ein Wiederauffüllen ausgewechselter Vorratsbehälter kann dann, wie in der Patentanmeldung DE-A-34 01 071 (veröffentlicht am 25-07-85) beschrieben, erfolgen.

Die Funktion des Mehrfarbendruckkopfes 32 entspricht im wesentlichen der Funktion eines anhand von Fig. 3 und 4 beschriebenen Druckkopfes. Ein Unterschied besteht jedoch darin, dass die Tintenkanäle des Mehrfarbendruckkopfes 32 gruppenweise mit den einzelnen Tintenvorratsbehältern in Verbindung stehen. Eine Tintenschreibeinrichtung mit einem Mehrfarbendruckkopf ist zum Beispiel in der DE-A-29 25 812 beschrieben. Im Ausführungsbeispiel nach Fig. 6 sind jeweils zwei Austrittsöffnungen zum Ausstoss von Tintentröpfchen einer Grundfarbe Cyan (C), Magenta (M), Gelb (Y) und Schwarz (S) vorgesehen. Es ist aber auch eine andere Zuordnung möglich. Durch die Relativbewegung zwischen dem Druckkopf 32 und dem Einzelblatt 11 in Papiervorschubrichtung einerseits sowie durch den in Zeilenrichtung über das Einzelblatt 11 bewegten Druckkopf 32 andererseits, kann jeder Bildpunkt innerhalb der für eine Zeichendarstellung vorgesehenen Matrix mit einem Tintentröpfchen einer Grundfarbe oder mit mehreren Tintentröpfchen jeweils verschiedener Grundfarbe bedruckt werden. Auf diese Weise lassen sich durch entsprechende Ansteuerung des Druckkopfes 32 eine grosse Anzahl von Mischfarben und damit mehrfarbige Zeichen oder Muster auf dem Einzelblatt 11 darstellen.

Im Beispiel nach Fig. 6 sind die Austrittsöffnungen in Reihen angeordnet. Es ist jedoch auch eine Anordnung möglich, bei der mehr Austrittsöffnungen gegeneinander versetzt und zu Gruppen zusammengefasst sind.

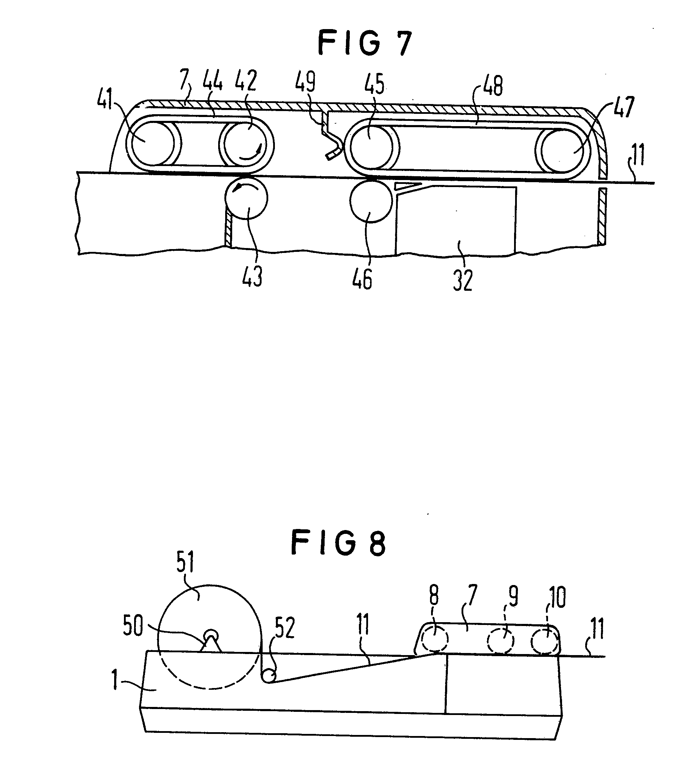

Für das Vereinzeln und für den Transport des Aufzeichnungsträgers kann auch ein Rollen-Riemen-System mit elektrostatischer Aufladung vorgesehen werden. Einzelheiten dazu zeigt Fig. 7. Zur Aufnahme und zum Einziehen jeweils eines Einzelblattes sind hier im oberen Gehäuseteil 7 drei über Riemen 44 gekoppelte Rollen 41, 42 und 43 vorgesehen. Dabei verhindert die Rolle 43 durch eine gegenläufige Drehrichtung, dass mehrere Blätter gleichzeitig eingezogen werden. Den Weitertransport durch das Druckgerät übernehmen die ebenfalls über Riemen 48 gekoppelten Rollen 45, 46 und 47. Über eine im Oberteil 7 angeordnete elektrostatische Aufladevorrichtung 49, an der die Riemen 48 vorbeigezogen werden, werden die Riemen 48 derart aufgeladen, dass zwischen ihm und einem erfassten Aufzeichnungsträger eine Haftungskraft entsteht, die ausreicht, um den Aufzeichnungsträger sicher zu transportieren. Diese Ausgestaltung hat den Vorteil, dass die vorher beschriebenen unteren Auswerfrollen entfallen können. Ein Verschmieren des eventuell noch druckfeuchten Schriftbildes wird somit vollständig vermieden. Weiterhin ist eine mechanische Einstellung auf verschiedene Papierformate nicht mehr nötig. Schliesslich wirkt sich diese Ausgestaltung auch deshalb vorteilhaft aus, als kleine und kleinste Staub-und Schmutzpartikel, die am Aufzeichnungsträger haften, abgezogen werden und eine Verschmutzung der sehr feinen Düsenöffunugen des Tintendruckkopfes erheblich seltener auftritt.

Die Erfindung wurde anhand eines Ausführungsbeispieles für Einzelblattbetrieb erläutert. Mit den gleichen Vorteilen ist jedoch ein Betrieb mit einem sogenannten endlosen Aufzeichnungsträger (Rollenpapier, Faltpapier) möglich. Im Falle der Verwendung von Faltpapier ist lediglich erforderlich, dass der zum Beispiel ausserhalb des Druckgerätes in Stapelform abgelegte Aufzeichnungsträger in den Vorratsraum des Bodenteils eingeführt wird. Der Transport des Aufzeichnungsträgers erfolgt dann wie im Vorhergehenden beschrieben, das heisst ein eigener sogenannter Traktorantrieb ist nicht erforderlich. Durch die langen seitlichen Wandungen des Vorratsraumes wird ein Verlaufen der eingezogenen Aufzeichnungsträgerbahn weitgehend vermieden. Die Abtastung und das Bedrucken erfolgen bei geradem Durchlauf, was insbesondere für den sogenannten Etikettendruck vorteilhaft ist, da dass ansonsten häufig auftretende Ablösen der Etiketten vom Trägermaterial vermieden wird.

Bei Verwendung von Rollenpapier ist es gemäss einer Ausgestaltung der Erfindung vorteilhaft, im Vorratsraum des Druckgerätes eine Halterung für eine Vorratsrolle vorzusehen. Ein Beispiel dafür zeigt Fig. 8. Im rechten Teil des Bodenteils 1 ist dort die Halterung 50 für den in Form einer Vorratsrolle 51 vorliegenden Aufzeichnungsträger 11 sowie ein Zugausgleich 52 angeordnet. Der Aufzeichnungsträger 11 wird durch die zum Beispiel anhand von Fig. 3 beschriebene Transportvorrichtung, von der hier nur die Funktionsrollen 18, 19 und 10 dargestellt sind, eingeführt und transportiert.

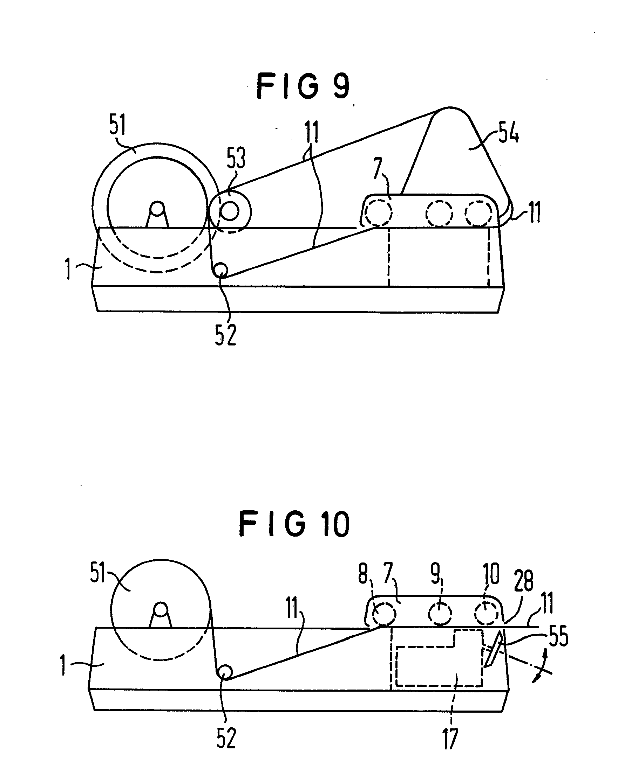

Gemäss einer anderen Ausgestaltung kann auch eine sogenannte Aufwickelrolle zur Aufnahme des aus dem Gerät entnommenen Aufzeichnungsträgers vorgesehen sein. Ein Beispiel dafür zeigt Fig. 9. Die hierfür vorgesehene Aufwickelrolle 53 wird vorteilhafterweise durch die Vorratsrolle 51 während des Abwickelvorganges zum Beispiel durch Friktion angetrieben. Der anhand von Fig. 3 beschriebene Aufnahmekorb kann in diesem Falle durch einen nach oben gezogenen Papierführungsteil 54 ersetzt sein.

Schliesslich kann das Druckgerät mit einer Abschneidevorrichtung ausgestattet sein. Ein Beispiel dafür zeigt Fig. 10. Der Aufzeichnungsträger 11 wird hier, wie beschrieben, von einer Vorratsrolle 51 über den Zugausgleich 52 abgezogen und über den Abtast- und Druckbereich mittels der Transportvorrichtung 8, 9 und 10 hinwegbewegt. Die Abschneidevorrichtung besteht aus einem am Druckerwagen 17 angeordneten Schneiderad 55, das in hier nicht näher dargestellter Weise umschaltbar zwei Stellungen einnehmen kann. Zur Verstellung des Schneiderades 55 kann beispielsweise ein mechanischer oder magnetischer Antrieb vorgesehen sein. In einer ersten sogenannten Ruhestellung ist das Schneiderad 55 soweit nach unten verschwenkt, dass es nicht mit dem Aufzeichnungsträger 11 in Eingriff kommt. In einer zweiten sogenannten Betriebsstellung ist das Schneiderad 55 soweit nach oben geschwenkt, dass es im Bereich des Austrittsschlitzes 28 in Eingriff mit dem Aufzeichnungsträger 11 gelangt und während einer Bewegung des Druckerwagens 17 gegen eine Gegenschneide oder Gegenkante den Aufzeichnungsträger 11 durchtrennt.

Die Erfindung verbindet in vorteilhafter Weise, die Möglichkeit der ein- oder mehrfarbigen Abtastung blattförmiger oder endloser Aufzeichnungsträger mit den Möglichkeiten der ein- oder mehrfarbigen Aufzeichnung vorzugsweise unter Verwendung von Tintenschreibeinrichtungen. Dabei können Aufzeichnungsträger verschiedener Qualitäten und Formate Verwendung finden. Die erfindungsgemässe Anordnung ermöglicht weiterhin einen sehr flachen, optisch ansprechenden Geräteaufbau, wie er beispielsweise für Tischgeräte zweckmässig ist. Dabei bieten sich besonders günstige ergonomische Gestaltungsmöglichkeiten. So können sämtliche Anzeige- und Bedienungselemente, wie Lampen, Tasten oder Schalter auf der Oberseite des Gerätes angeordnet sein, das erleichtert nicht nur die Übersichtlichkeit, sondern auch die Zugänglichkeit.

## Patentansprüche

1. Gerät zum Abtasten und/oder zum Bedrucken von Aufzeichnungsträgern (11), bestehend aus einem Bodenteil (1) und einem mit diesem lösbar verbundenen Oberteil (7) sowie mit einer optischen Abtasteinrichtung (6) und einer Druckeinrichtung (4), die auf einem gemeinsamen Druckerwagen (17) angeordnet sind, mit einem Vorratsraum (2) für den Aufzeichnungsträger (11), durch die der Aufzeichnungsträger (11) im Vorratsraum (2) erfasst, der Vorschubrichtung entsprechend in Richtung zur Abtast- und Druckeinrichtung (4, 6) transportiert und nach dem Vorbeilauf an der Abtast- und Druckeinrichtung über einen Austrittsschlitz (28) im Oberteil (7) aus dem Gerät herausgeschoben wird, dadurch gekennzeichnet,

dass eine Transportvorrichtung (5) im Oberteil (7), der Vorratsraum (2) sowie die Abtast- und die Druckeinrichtung (4, 6) im Bodenteil (1) des Gerätes angeordnet sind, wobei die Abtast- und die Druckeinrichtung (4, 6) in Vorschubrichtung des Aufzeichnungsträgers (11) zwischen dem Vorratsraum (2) und dem Austrittsschlitz (28) unterhalb des Aufzeichnungsträgers (11) angeordnet ist,

dass die Transportvorrichtung (5) erste, zweite und dritte Antriebsrollen (8, 9, 10) aufweist, wobei die ersten Antriebsrollen (8) den Aufzeichnungsträger (11) im Vorratsraum (2) erfassen und in Vorschubrichtung transportieren,

die zweiten Antriebsrollen (9) zwischen dem Vorratsraum (2) und der Abtast- und Druckeinrichtung (4, 6) und die dritten Antriebsrollen (10) zwischen der Abtast- und Druckeinrichtung (4, 6) und dem Austrittsschlitz (28) angeordnet sind,

dass schwenkbare Ausrichthebel (22) vorgesehen sind, die durch den in Vorschubrichtung transportierten Aufzeichnungsträger (11) betätigt werden, wobei der Antrieb für die ersten Antriebsrollen (8) abgeschaltet und die zweiten und dritten Antriebsrollen (9, 10) auf den Aufzeichnungsträger (11) abgesenkt werden, und dass die durch den Antrieb der ersten, zweiten und dritten Antriebsrollen (8, 9, 10) bestimmte Vorschubgeschwindigkeit des Aufzeichnungsträgers (11) entsprechend der für eine zeilenweise Abtastung durch die Abtasteinrichtung (6) und für einen zeilenweisen Druck durch die Druckeinrichtung (4) bestimmten Geschwindigkeit eingestellt ist.

2. Gerät nach Anspruch 1, dadurch gekennzeichnet, dass die Antasteinrichtung (6) ein CCD-Bildsensor und die Druckeinrichtung (4) eine nach dem Unterdruckverfahren arbeitende Tintenschreibeinrichtung (13, Fig. 3, 4; 32, Fig. 5, 6) ist und

dass die von der Abtasteinrichtung (6) während des Einführ- und des Transportvorganges eines Aufzeichnungsträgers (11) gebildeten Steuerkriterien nach einer Zwischenspeicherung die Tintenschreibeinrichtung (13, Fig. 3, 4; 32, Fig. 5, 6) zum Bedrucken eines weiteren Aufzeichnungsträgers steuern.

3. Gerät nach Anspruch 1, dadurch gekennzeichnet dass eine als bogenförmiger Korb (29) ausgebildete und am Bodenteil (1) lösbar befestigte Vorrichtung zur Aufnahme des den Austrittsschlitz (28) verlassenden Aufzeichnungsträgers (11) vorgesehen ist, durch die der Aufzeichnungsträger (11) gewendet und auf einer teilweise durch das Oberteil (7) und durch eine Ablagefläche (30) gebildeten Ablage abgelegt wird.

4. Gerät nach Anspruch 1, dadurch gekennzeichnet, dass im Vorratsraum (2) eine Halterung (50) für eine Vorratsrolle (51) des Aufzeichnungsträgers vorgesehen ist, von der die Transportvorrichtung (5) den Aufzeichnungsträger (11) über eine Vorrichtung (52) zum Zugausgleich abzieht.

5. Gerät nach Anspruch 4, dadurch gekennzeichnet, dass im Vorratsraum (2) eine Aufwikkelrolle (53) vorgesehen ist, die durch die Vorratsrolle (51) angetrieben ist.

## Revendications

1. Appareil pour explorer et/ou imprimer des supports d'enregistrements (11), comprenant un fond (1) et une partie supérieure ou capot (7) relié de amovible au fond, ainsi qu'un dispositif d'exploration optique (6) et un dispositif d'impression (4) disposés sur un chariot d'impression (17) commun, avec un magasin (2) pour le support d'enregistrement (11) et un dispositif de transport (5) par lequel le support d'enregistrement (11) est saisi dans le magasin (2), transporté dans le sens de son défilement en direction des dispositifs d'exploration et d'impression (4, 6) et, après le passage devant les dispositifs d'exploration et d'impression, est poussé hors de l'appareil à travers une fente de sortie (28) dans le capot (7), caractérisé en ce

que le dispositif de transport (5) est prévu dans le capot (7) el le magasin (2), de même que les dispositifs d'exploration et d'impression (4, 6) sont prévus dans le fond (1) de l'appareil, les dispositifs d'exploration et d'impression (4, 6) étant montés entre le magasin et la fente de sortie (28), dans le sens du défilement du support d'enregistrement (11), au-dessous de celui-ci,

que le dispositif de transport (5) comporte des premiers, deuxièmes et troisièmes galets d'entraînement (8, 9, 10), les premiers galets d'entraînement (8) saisissant le support d'enregistrement (11) dans le magasin (2) et le transportant dans le sens du défilement,

les deuxièmes galets d'entraînement (9) étant prévus entre le magasin (2) et les dispositifs d'exploration et d'impression (4, 6) et les troisièmes galets d'entraînement (10) étant placés entre les dispositifs d'exploration et d'impression (4, 6) et la fente de sortie (28), que des leviers d'alignement (22) pivotants sont prévus pour être actionnés par le support d'enregistrement (11) transporté dans le sens du défilement, ce qui provoque l'arrêt d'entraînement des premiers galets (8) et l'abaissement sur le support d'enregistrement (11) des deuxièmes et troisièmes galets (9, 10) et

que la vitesse de défilement du support d'enregistrement (11), déterminée par l'entraînement des premiers, deuxièmes et troisièmes galets (8, 9, 10), est ajustee à une valeur correspondant à l'exploration ligne par ligne par le dispositif d'exploration (6) et pour une impression ligne par ligne le dispositif d'impression (4).

2. Appareil selon la revendication 1, caractérisé en ce que le dispositif d'exploration (6) est un analyseur d'image du type à transfert de charge et le dispositif d'impression (4) est un enregistreur à encre opérant selon le procédé à dépression (13, figures 3, 4; 32 figures 5, 6) et

que les critères de commande, formés par le dispositif d'exploration (6) pendant l'opération d'introduction et de transport d'un support d'enregistrement (11), commandent aprés une mémorisation intermédiaire, l'enregistreur à encre (13, figures 3, 4; 32, figures 5, 6) pour l'impression d'un autre support d'enregistrement.

3. Appareil selon la revendication 1, caractérisé en ce qu'il est équipé d'un dispositif, réalisé sous forme d'un panier courbe (29) qui est fixé amovible au fond (1), pour recevoir le support d'enregistrement (11) quittant l'appareil par la fente de sortie (28), pour retourner le support d'enregistrement (11) et pour le déposer sur une surface de réception (30) constituée en partie au moins par le capot (7).

4. Appareil selon la revendication 1, caractérisé en ce que le magasin (2) comporte un support (50) pour un support d'enregistrement en forme de bobine (51), d'où le dispositif de transport (5) retire le support d'enregistrement (11) avec interposition d'un dispositif (52) pour l'égalisation de la tension.

5. Appareil selon la revendication 4, caractérisé en ce que le magasin (2) contient un rouleau de renvidage (53) qui est entraîné en rotation par la bobine (51) de support d'enregistrement.

## Claims

1. A device for scanning and/or printing data carriers (11), consisting of a base component (1) and an upper component (7) which is detachably connected thereto, and with an optical scanning mechanism (6) and a printing mechanism (4) which are arranged on a common printer carriage (17), with a supply space (2) for the data carrier (11), by which the data carrier (11) in the supply space (2) is apicked up, is transported to the scanning and printing mechanism (4, 6) in accordance with the feed direction, and having moved past the scanning and printing mechanism is ejected from the device via an outlet solt (28) in the upper component (7), characterised in

that a transportation device (5) is arranged in the upper component (7) of the device, whilst the supply space (2) and the scanning and printing mechanism (4, 6) are arranged in the base component (1) of the device, where the scanning and printing mechanism (4, 6) is arranged, in the feed direction of the data carrier (11), between the supply space (2) and the outlet slot (28) beneath data carrier (11),

that the transportation device (5) comprises first, second and third drive rollers (8, 9, 10), where the first drive rollers (8) pick up the data carrier (11) in the supply space (2) and transport it in the feed direction,

the second drive rollers, (9) are arranged between the supply space (2) and the scanning and printing mechanism (4, 6), and the third drive rollers (10) are arranged between the scanning and printing mechanism (4, 6) an the outlet slot (28),

that pivotable aligning levers (22) are provided which are actuated by the data carrier (11) transported in the feed direction, where the drive means for the first drive rollers (8) is switched off and the second and third drive rollers (9, 10) are lowered onto the data carrier (11), and that the feed speed of the data carrier (11), which is defined by the drive of the first, second and third drive rollers (8, 9, 10) is set in accordance with the speed specified for line-by-line scanning by the scanning mechanism (6) and for line-by-line printing by the printing mechanism (4).

2. A divice as claimed in Claim 1, characterised in that the scanning mechanism (6) is a CCD-image sensor and the printing mechanism (4) is an ink recorder (13, figure 3, 4; 32, figure 5, 6) which operates in accordance with the vacuum principle and

that the control criteria formed by the scanning mechanism (6) during the insertion and transportation of a data carrier (11), having been intermediately stored, control the ink recorder (13, figure 3, 4; 32 figure 5, 6) for the printing of a further data carrier.

3. A device as claimed in Claim 1, characterised in that a device which is formed as a curved basket (29) and which is detachably secured to the base component (1) is provided to receive the data carrier (11) which emerges from the oulet slot (28), by which device the data carrier (11) is inverted and deposited on a depositing device formed in part by the upper component (7) and by a depositing surface (30).

4. A device as claimed in Claim 1, characterised in that the supply space (2) contains a support (50) for a supply reel (51) of the data carrier, from which the transportation device (5) unreels the data carrier (11) via a tension compensating device (52).

5. A device as claimed in Claim 4, characterised in that the supply space (2) contains a pick-up reel (53) which is driven by the supply reel (51).

## 1/5

FIG 1

FIG 2

FIG 3

FIG 4

## FIG 7

## FIG 8

# FIG 9

# FIG 10